# EUROPEAN PATENT SPECIFICATION

(11) **EP 2 380 855 B1**
(45) Date of publication and mention of the grant of the patent: **28.08.2013**
(21) Application number: 11162881.4
(22) Date of filing: 18.04.2011
(51) Int. Cl.: C03B 37/014

(54) **Burner for manufacturing porous glass preform**
Brenner zur Herstellung von poröser Glasvorform
Brûleur pour la fabrication d'une préforme de verre poreux

(30) Priority: 23.04.2010 JP 2010100093
(43) Date of publication of application: 26.10.2011
(73) Proprietor: Shin-Etsu Chemical Co., Ltd., Chiyoda-ku, Tokyo (JP)
(72) Inventor: Yoshida, Makoto, Kamisu-shi, Ibaraki (JP)
(74) Representative: Larcher, Dominique

(56) References cited:
- EP-A1- 1 538 130
- EP-A2- 2 096 087
- JP-A- 5 323 130
- JP-A- 10 101 343
- JP-A- 2002 228 121
- JP-A- 2003 226 544
- JP-A- 2004 269 334
- JP-A- 2004 331 440

## Description

### BACKGROUND OF THE INVENTION

### 1. FIELD OF THE INVENTION

The present invention relates to a burner for manufacturing a porous glass preform, which can improve the gas mixing efficiency and improve deposition efficiency without increasing turbulence of the flame.

### 2. DESCRIPTION OF RELATED ART

Conventionally, various methods have been proposed to manufacture an optical fiber preform.

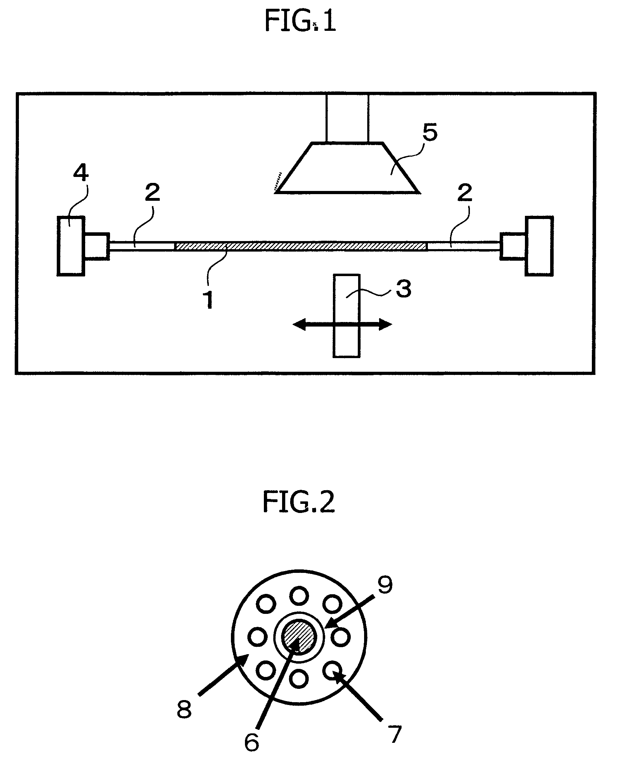

FIG. 1 shows one example of a device for manufacturing the optical fiber preform by using an outside vapor deposition process (OVD process). In this device, a starting member 1 is held by a chuck mechanism 4 via dummy rods 2. Glass particulates generated in the flame of a burner 3 are stuck and deposited on the rotating starting member 1 while the burner 3 or the starting member 1 is reciprocatingly moved relatively to synthesize a glass particulate deposited body (hereinafter, referred to as soot), and the soot is dehydrated, sintered, and transparently vitrified in an electric furnace, whereby an optical fiber preform is obtained. In FIG. 1, reference numeral 5 denotes an exhaust hood. The OVD process has been employed widely because, by this process, a product having a relatively freely selected refraction factor distribution can be obtained, and moreover a large-diameter optical fiber preform can be mass produced.

As a burner for synthesizing the soot, a concentric multiple tube burner has been used. However, the burner having this configuration has been insufficient to generate glass particulates because glass source gas, combustible gas, and supporting gas are not mixed sufficiently. As a result, the deposition efficiency has not increased, and therefore it has been difficult to accomplish the synthesis at high speed.

To solve this problem, Patent Document 1 proposes a multiple nozzle burner in which, as shown in FIG. 2, in a combustible gas injection port 8, small-diameter supporting gas injection ports 7 are arranged in a row concentrically with a glass source gas injection port 6 in the center. In FIG. 2, reference numeral 9 denotes a seal gas injection port.

Furthermore, Patent Document 2 proposes a method of preventing the turbulence of source gas flow by making the focal distance L1 of the small-diameter supporting gas injection ports longer than the distance L2 from the front end of the small-diameter supporting gas injection port small-diameter supporting gas injection port to the preform deposition surface. Patent Document 3 proposes a method of improving the deposition efficiency by inversely making the distance L1 shorter than the distance L2 to enhance the gas mixing efficiency.
Patent Document 1: Japanese Patent No. 1773359
Patent Document 2: Japanese Patent No. 3543537
Patent Document 3: JP 2003-226544 A

Patent document 3 discloses a burner for manufacturing a porous glass preform, which is provided with a combustible gas injection port involving a plurality of small-diameter supporting gas injection ports such that the injection ports of the same row have equal focal distance, the small-diameter supporting gas injection ports being arranged on the outside of a glass source gas injection port in the center so as to be in a row or in a plurality of rows and concentric with the glass source gas injection port.

In the above-described proposals, the multiple nozzle burner that supplies supporting gas through the small-diameter gas injection ports arranged in a row concentrically and having a focal point has features of improving the mixing efficiency of combustible gas, supporting gas, and glass source gas and improving the deposition efficiency.

Therefore, as a method of further improving the mixing efficiency, the optimization of the focal distance of the small-diameter supporting gas injection ports has been studied.

Concerning the focal distance of the small-diameter supporting gas injection ports, generally, the focal point of the small-diameter gas injection ports is adjusted by bending the small-diameter gas injection ports at certain positions from the burner front end in the burner longitudinal direction.

As the result of extensive research, it has been revealed that it is important to prevent the flame from becoming more turbulent than necessary, in addition to enhancement of the mixing efficiency of injected gases.

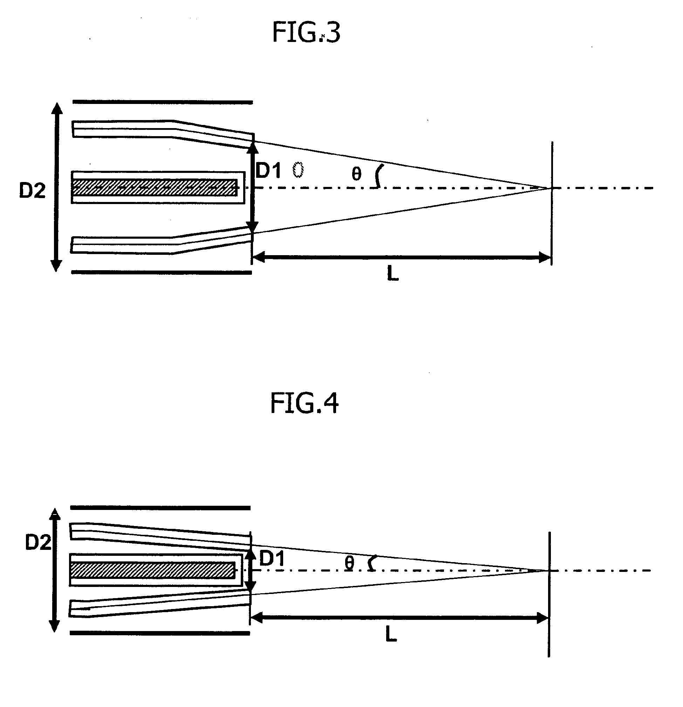

Specifically, as shown in FIG. 3, the plurality of small-diameter gas injection ports arranged concentrically are bent toward the burner center axis, so that the distance between the small-diameter gas injection ports opposed to each other with the center axis being held therebetween at the burner front end (hereinafter, referred to as PCD) D1 is shortened. However, if the bend angle θ of the small-diameter gas injection port increases, the gas flow injected from the small-diameter gas injection port row collides, at an acute angle, with the glass source gas flow injected from the glass source gas injection port in the center. Therefore, although the mixing of gases is promoted, the turbulence of the flame increases, so that the deposition efficiency is hindered from being improved.

Also, if the focal distance is equal, as the bend angle of the small-diameter gas injection port increases, the PCD of the small-diameter gas injection ports at the burner front end increases, so that the diameter of the combustible gas injection port involving the small-diameter gas injection port row inevitably becomes large. This not only makes the burner larger than necessary but also enlarges the flow path area of combustible gas more than necessary. Therefore, if the amount of supplied combustible gas is equal, the density of a porous glass preform decreases.

Consequently, to adjust the soot density to a proper range, the quantity of combustible gas and supporting gas consumed is inevitably increased, which results in an increase in manufacturing cost. Furthermore, the thermal stress applied to the device increases, which presents a problem of formation of cracks on the wall surface of the device.

### SUMMARY OF THE INVENTION

An object of the present invention is to provide a burner for manufacturing a porous glass preform, which is capable of enhancing the gas mixing efficiency, improving the deposition efficiency, and reducing the thermal load applied to the device without an increase in the quantity of combustible gas and supporting gas consumed and without turbulence of the flame flow.

The present invention provides a burner for manufacturing a porous glass preform, which is provided with a combustible gas injection port involving a plurality of small-diameter supporting gas injection ports such that the injection ports of the same row have the equal focal distance, the small-diameter supporting gas injection ports being arranged on the outside of a glass source gas injection port in the center so as to be in a row or in a plurality of rows and concentric with the glass source gas injection port, wherein the small-diameter supporting gas injection ports are bent toward the burner center axis at predetermined positions from the tip ends of the small-diameter supporting gas injection ports so that the focal points of the small-diameter supporting gas injection ports of the same row agree with each other, and the bend angle of the small-diameter supporting gas injection port row closest to the glass source gas injection port in the center of the small-diameter supporting gas injection port rows arranged in the plurality of rows is at most 5 degrees with respect to the burner center axis. The bend angle is preferably at least 4 degrees and at most 5 degrees.

The present invention also provides a method of manufacturing a porous glass preform by using the above-described burner for manufacturing a porous glass preform.

According to the burner for manufacturing a porous glass preform of the present invention, the flame is not made more turbulent than necessary, and high mixing efficiency is maintained, so that the deposition efficiency is improved. Furthermore, not only can the burner be made compact and the thermal load applied to the device be reduced, but also the supply amount of combustible gas and supporting gas can be reduced, and therefore the manufacturing cost of a porous glass preform can be reduced.

### BRIEF DESCRIPTION OF THE DRAWINGS

FIG. 1 is a schematic view showing one example of a device for manufacturing an optical fiber preform;
FIG. 2 is a transverse sectional view of a burner for synthesizing glass particulates, which has small-diameter gas injection ports;
FIG. 3 is a schematic longitudinal sectional view showing one example of a burner having small-diameter gas injection ports each having a large bend angle;
FIG. 4 is a schematic longitudinal sectional view showing one example of a burner having small-diameter gas injection ports each having a small bend angle;
FIG. 5 is a schematic longitudinal sectional view showing one example of a burner having two-row small-diameter gas injection ports;
FIG. 6 is a graph showing the relationship between focal distance and deposition efficiency; and
FIG. 7 is a graph showing the relationship between bend angle of small-diameter supporting gas injection port and deposition efficiency.

### DETAILED DESCRIPTION OF PREFERRED EMBODIMENTS

An embodiment of the present invention will now be described in detail with reference to the accompanying drawings. The present invention is not limited to the embodiment described below.

FIG. 1 shows one example of a manufacturing device used in the present invention. A starting member is configured by welding dummy rods 2 to both end portions of a core rod 1, and is supported by a chuck mechanism 4 so as to be rotatable around the axis. Facing this starting member, a burner 3 movable to the right and left is arranged. By using this device, optical fiber raw materials, that is, vapor of, for example, SiCl₄ and combustion gas (hydrogen gas and oxygen gas) are blown from the burner 3 to the starting member, whereby glass particulates (soot) generated by hydrolysis in an oxyhydrogen flame is deposited on the starting member. The burner 3 is reciprocatingly moved along the longitudinal direction of the starting member by a burner guide mechanism (not shown) to form a deposited layer, whereby a porous glass preform for an optical fiber is formed. Although not shown in the figure, in place of the movement of the burner 3, the starting member may be moved in the longitudinal direction.

Furthermore, the porous glass preform for optical fiber is dehydrated in a heating furnace, and thereafter is transparently vitrified to form a glass preform for optical fiber.

The burner 3 used is configured by involving one row or a plurality of rows of small-diameter supporting gas injection ports 7 having the same focal distance in a combustible gas injection port 8 provided on the outside of a glass source gas injection port 6 in the center. The small-diameter supporting gas injection ports 7 arranged in the same row each are bent toward the burner center axis at a predetermined position from the tip end so that the focal points thereof agree with each other. The bent angle of at least the small-diameter supporting gas injection port row closest to the glass source gas injection port 6 in the center of the small-diameter supporting gas injection port rows is in the range of 5 degrees or smaller, preferably in the range of 4 degrees or more and 5 degrees or less. Thereby, the gas flows injected from the small-diameter supporting gas injection ports are caused to collide with a glass source gas flame flow at an acute angle, so that the flame is not made turbulent, and the gas flows gradually approach each other and are mixed.

Consequently, the flame is not made more turbulent than necessary, and high mixing efficiency is maintained, so that the deposition efficiency is improved. If the bent angle is 5 degrees or less, the effect on the turbulence of the flame is slight, so that the difference in deposition efficiency with angle is small. However, as the bend angle of the small-diameter supporting gas injection port decreases, the small-diameter gas injection port comes closer to the gas injection port tip end located on the inside thereof, so that the bent angle must be set in the non-contact range. Also, if the bend angle is less than 4 degrees, it is sometimes difficult to manufacture the burner. Therefore, the bend angle is preferably made in the range of 4 degrees or more and 5 degrees or less.

Furthermore, if the bend angle is small, the PCD of the small-diameter gas injection port tip end is also short, so that the inside diameter of the combustible gas injection port involving the small-diameter gas injection ports can also be made small. Thereby, not only can the burner be made compact, but also the gas flow path area is made small, and the gas can be supplied so as to concentrate at the flame center. Therefore, in the case in which porous glass preforms having the same density is to be obtained, the supply amount of combustible gas and supporting gas can be reduced, and the manufacturing cost can be reduced.

### Examples

In an example, porous glass preforms for optical fiber were manufactured by the outside vapor deposition process using the device shown in FIG. 1.

The burner used was a burner for synthesizing glass particulates, which is provided with the combustible gas injection port 8 on the outside of the glass source gas injection port 6 in the center as shown in FIG. 2. The combustible gas injection port 8 involves the supporting gas injection ports 7 that are arranged in a row concentrically with the glass source gas injection port 6 and are bent so that the injection parts of the same row have a focal distance of a length L.

The burner characteristics other than the focal distance were made the same, and five types of burners in which the focal distance L of the supporting gas injection port row was made 100 mm, 125 mm, 150 mm, 175 mm and 200 mm were prepared. By using these burners, 100 kg of porous glass particulates were deposited on a starting member in which dummy rods, each having an outside diameter of 55 mm, were welded to both end portions of a core rod having an outside diameter of 55mm and a length of 1500 mm.

Concerning the supplied gases, to the first tube of the burner, SiCl4 was supplied as the glass source gas, and O₂ was supplied as the supporting gas; to the second tube thereof, N₂ was supplied as the combustible gas; and to the small-diameter gas injection ports involved in the third tube thereof, O₂ was supplied as the supporting gas. The amounts of these gases were made equal in five types of burners.

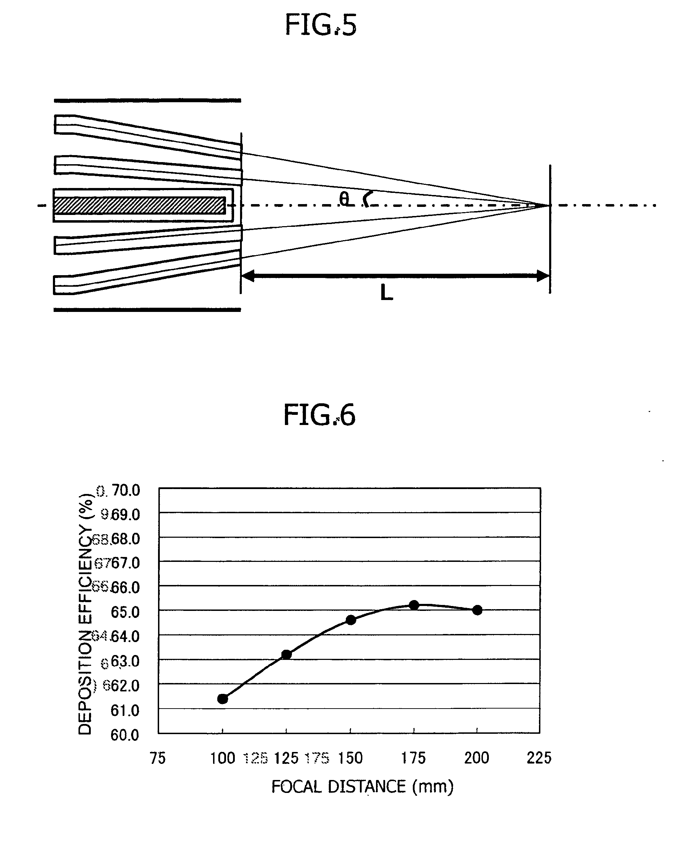

As the result, as shown in FIG. 6, the deposition efficiency of the burner in which the focal distance was 175 mm was the highest.

### Example 1

Five types of burners were prepared, in which the focal distance L of burner was fixed at 175 mm based on the above-described result, the bend angle of small-diameter gas injection port was made 4.0, 4.5, 5.0, 5.5 and 6.0 degrees, and the burner particulars other than the bend angle of small-diameter gas injection port were made equal as given in Table 1. One hundred kilograms of porous glass particulates were deposited on a starting member in which dummy rods each having an outside diameter of 55 mm were welded to both end portions of a core rod having an outside diameter of 55mm and a length of 1500 mm. The inside diameter of the combustible gas injection port involving the small-diameter gas injection ports was made 42 mm so as to correspond to the burner having a bend angle of 6.0 degrees.

**Table 1**

| | Small-diameter supporting gas port | | | Combustible gas port |
|---|---|---|---|---|
| | Bend angle | Focal distance | PCD | Inside diameter |
| | deg | mm | mm | mm |
| Type A | 4.0 | 175 | 24.5 | 42 |
| Type B | 4.5 | 175 | 27.5 | 42 |
| Type C | 5.0 | 175 | 30.6 | 42 |
| Type D | 5.5 | 175 | 33.7 | 42 |
| Type E | 6.0 | 175 | 36.8 | 42 |

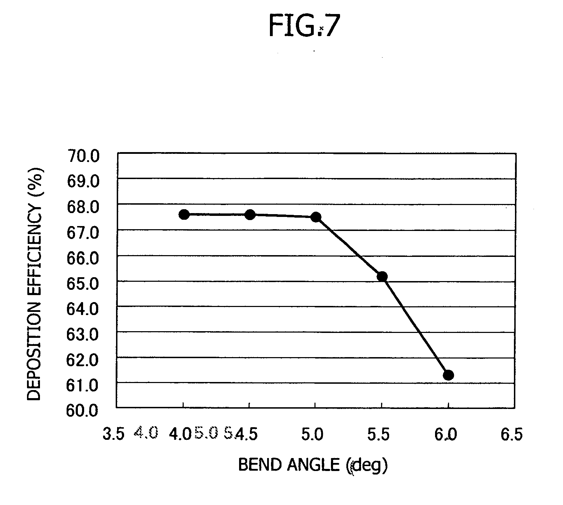

As the result, when the bend angle was greater than 5 degrees, as the bend angle increased, the flame turbulence near the focal distance increased, and therefore the deposition efficiency decreased as shown in FIG. 7. On the other hand, when the bend angle was less than 5 degrees, no difference in flame turbulence was found, and the deposition efficiency was also almost equal. If the bend angle was less than 4 degrees, the clearance between the small-diameter supporting gas injection port and the gas injection port on the inside thereof was too small, so that it was impossible to manufacture a precise burner. Therefore, the bend angle is preferably 5 degrees or less, and further preferably in the range of 4 degrees or more and 5 degrees or less. The soot density was 0.7 g/cm³ in all cases.

### Example 2

Next, the bend angle was made 5 degrees, which was equal to the bend angle of type C, the inside diameter of the combustible gas injection port involving the small-diameter supporting gas injection ports was decreased to 36 mm, although the inside diameter in example 1 was 42 mm, and the gas flow rate was regulated so that the soot density was 0.7 g/cm³, which was equal to that in example 1. As the result, the gas flow rate given in Table 2 was attained, and the gas flow rate of combustible gas could be decreased by 20%.

**Table 2**

| | Small-diameter supporting gas port | | | Combustible gas port | |
|---|---|---|---|---|---|
| | Bend angle | Focal distance | PCD | Inside diameter | Flow rate |
| | deg | mm | mm | mm | L/min |
| Type C | 5.0 | 175 | 30.6 | 42 | 200 |
| Type F | 5.0 | 175 | 30.6 | 36 | 160 |

### Industrial Application

The present invention contributes to reduction in size of a burner and improvment of quality.

## Claims

1. A burner (3) for manufacturing a porous glass preform, which is provided with a combustible gas injection port (8) involving a plurality of small-diameter supporting gas injection ports (7) such that the injection ports of the same row have equal focal distance, the small-diameter supporting gas injection ports (7) being arranged on the outside of a glass source gas injection port (6) in the center so as to be in a row or in a plurality of rows and concentric with the glass source gas injection port (6), wherein
the small-diameter supporting gas injection ports (7) are bent toward the burner center axis at predetermined positions from the tip ends of the small-diameter supporting gas injection ports(7) so that the focal points of the small-diameter supporting gas injection ports of the same row agree with each other, and
**characterized in that** the bend angle of the small-diameter supporting gas injection port (7) row closest to the glass source gas injection port (6) in the center of the small-diameter supporting gas injection port rows arranged in the plurality of rows is at most 5 degrees with respect to the burner center axis.

2. The burner (3) for manufacturing a porous glass preform according to claim 1, wherein the bend angle is at least 4 degrees and at most 5 degrees.

3. A method of manufacturing a porous glass preform by using the burner for manufacturing a porous glass preform according to claim 1 or 2.

## Patentansprüche

1. Brenner (3) zur Herstellung von poröser Glasvorform, der mit einer Öffnung zur Injektion von brennbarem Gas (8) ausgestattet ist, umfassend eine Vielzahl von unterstützenden Öffnungen zur Injektion von Gas mit kleinem Durchmesser (7), so dass die Öffnungen zur Injektion der gleichen Reihe eine gleiche Brennweite aufweisen, wobei die unterstützenden Öffnungen zur Injektion von Gas mit kleinem Durchmesser (7) auf der Außenseite einer Öffnung zur Injektion von Gas einer Glasquelle (6) in der Mitte angeordnet sind, so dass sie sich in einer Reihe oder in einer Vielzahl von Reihen und konzentrisch mit der Öffnung zur Injektion von Gas der Glasquelle (6) befinden, wobei
die unterstützenden Öffnungen zur Injektion von Gas mit kleinem Durchmesser (7) zur zentralen Achse des Brenners hin an vorbestimmten Positionen von den Spitzenenden der Öffnungen zur Injektion von unterstützendem Gas mit kleinem Durchmesser (7) geneigt sind, so dass die Brennpunkte der unterstützenden Öffnungen zur Injektion von Gas mit kleinem Durchmesser der gleichen Reihe miteinander übereinstimmen, und
**dadurch gekennzeichnet, dass** der Neigungswinkel der Reihe der unterstützenden Öffnungen zur Injektion von Gas mit kleinem Durchmesser (7), die sich am nächsten an der Öffnung zur Injektion von Gas der Glasquelle (6) im Zentrum der Reihen der unterstützendem Öffnungen zur Injektion von Gas mit kleinem Durchmesser (7) in der Vielzahl von Reihen befindet, höchstens 5 Grad mit Bezug auf die zentrale Achse des Brenners angeordnet ist.

2. Brenner (3) zur Herstellung von poröser Glasvorform nach Anspruch 1, wobei der Neigungswinkel mindestens 4 Grad und höchstens 5 Grad beträgt.

3. Verfahren zur Herstellung einer porösen Glasvorform unter Verwendung des Brenners zur Herstellung einer porösen Glasvorform nach Anspruch 1 oder 2.

## Revendications

1. Brûleur (3) pour la fabrication d'une préforme de verre poreux, qui est pourvu d'un orifice d'injection de gaz combustible (8) comprenant une pluralité d'orifices d'injection de gaz support de petit diamètre (7) de sorte que les orifices d'injection de la même rangée possèdent une distance focale égale, les orifices d'injection de gaz support de petit diamètre (7) étant agencés sur l'extérieur d'un orifice d'injection de gaz de source de verre (6) au centre afin d'être dans une rangée ou dans une pluralité de rangées et concentriques avec l'orifice d'injection de gaz source de verre (6), dans lequel
les orifices d'injection de gaz support de petit diamètre (7) sont inclinés vers l'axe central du brûleur dans des positions prédéterminées à partir des extrémités d'embout des orifices d'injection de support de petit diamètre(7) pour que les points focaux des orifices d'injection de gaz support de petit diamètre de la même rangée coïncident les uns avec les autres, et
**caractérisé en ce que** l'angle d'inclinaison de la rangée d'orifices d'injection de gaz support de petit diamètre (7) la plus près de l'orifice d'injection de gaz source de verre (6) au centre des rangées d'orifices d'injection de gaz support de petit diamètre agencées dans la pluralité de rangées soit d'au plus 5 degrés par rapport à l'axe central de brûleur.

2. Brûleur (3) pour la fabrication d'une préforme de verre poreux selon la revendication 1, dans lequel l'angle d'inclinaison est d'au moins 4 degrés et d'au plus 5 degrés.

3. Procédé de fabrication d'une préforme de verre poreux en utilisant le brûleur pour la fabrication d'une préforme de verre poreux selon la revendication 1 ou 2.
